# FASCICULE DE BREVET EUROPEEN

(11) **EP 1 231 803 B1**
(45) Date de publication et mention de la délivrance du brevet: **01.07.2009**
(21) Numéro de dépôt: 02290280.3
(22) Date de dépôt: 06.02.2002
(51) Int. Cl.: H04W 24/00

(54) **Procede et outil de test pour reseau de radio-telephonie cellulaire a multiplexage par code de repartition**
Verfahren und vorrichtung zum testen eines kodemultiplexvielfachzugriffssystem
Procedure and apparatus for testing a code division multiple access (CDMA) cellular radio-telephone network

(30) Priorité: 09.02.2001 FR 0101786
(43) Date de publication de la demande: 14.08.2002
(73) Titulaire: Sagem Mobiles, 75015 Paris (FR)
(72) Inventeur: Criton, Romain, 92300 Levallois-Perret (FR)
(74) Mandataire: Callon de Lamarck, Jean-Robert

(56) Documents cités:
- WO-A-93/15569
- KI-HONG KIM ET AL: "DEVELOPMENT OF THE CDMA SYSTEM PERFORMANCE ANALYSIS TOOL(CDAT)" 1996 IEEE 46TH. VEHICULAR TECHNOLOGY CONFERENCE. MOBILE TECHNOLOGY FOR THE HUMAN RACE. ATLANTA, APR. 28 - MAY 1, 1996, IEEE VEHICULAR TECHNOLOGY CONFERENCE, NEW YORK, IEEE, US, vol. 2 CONF. 46, 28 avril 1996 (1996-04-28), pages 1400-1403, XP000593161 ISBN: 0-7803-3158-3

## Description

La présente invention est relative à un procédé de test pour réseau de radio-téléphonie cellulaire à multiplexage par code de répartition (multiplexage CDMA ou "Code division Multiple Access" selon la terminologie anglo-saxonne généralement utilisée).

Elle trouve en particulier avantageusement application dans le cas de réseaux à codes de répartition large bande (W-CDMA ou "Wideband CDMA" selon la terminologie anglo-saxonne) et notamment de réseaux UMTS.

### DOMAINE GENERAL ET ETAT DE LA TECHNIQUE

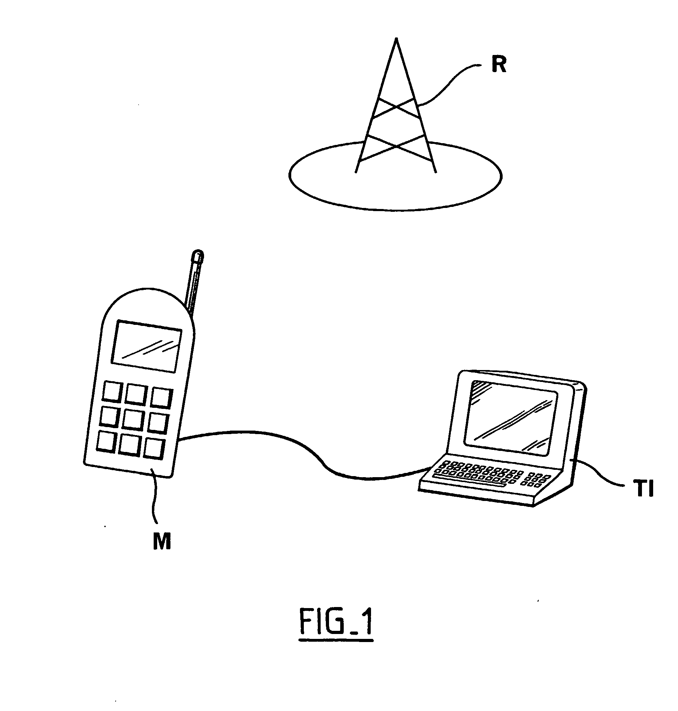

Les opérateurs de télécommunications utilisent classiquement pour tester fonctionnellement les réseaux GSM et mettre en oeuvre des mesures de couverture de réseau et de qualité de services des systèmes dits outils de test, comportant, ainsi que l'illustre la figure 1 :
- au moins un terminal mobile de test M,
- un terminal TI qui est un instrument d'interface à partir duquel l'utilisateur pilote le test et a accès aux informations de trace qui lui sont renvoyées par le terminal mobile, ce terminal TI étant relié au terminal mobile de test M par une liaison série S.

Sur cette figure 1, on a également représenté schématiquement par une balise R de station de base une architecture de réseau à tester.

On connait de l'article de Ki-Hong Kim et al., "IEEE Vehicular Technology Conference, 28 avril 1996, pages 1400-1403, «Development of the CDMA System Performance Analysis Tool (CDAT)» un outil de test pour l'évaluation des performances d'un réseau CDMA comprenant des moyens d'interface et mettant en oeuvre un mobile de test.

L'invention propose quant à elle un système de test particulièrement adapté pour les réseaux cellulaires mettant en oeuvre un multiplexage du type à code de répartition et plus particulièrement un multiplexage à bande large.

La gestion des ressources radiofréquences des réseaux à multiplexage par code de répartition diffère beaucoup de celle des réseaux à multiplexage temporelle (multiplexage TDMA ou "Time Division Multiple Access" selon la terminologie anglo-saxonne).

Alors que les limites des capacités des réseaux GSM sont parfaitement connues et bien définies, les réseaux à multiplexage par division de codes ne connaissent aucune limite stricte théorique. C'est le cas notamment pour les réseaux UMTS (Universal Mobile Telecommunication System) qui utilisent un multiplexage à code de répartition à bande large.

Sur une porteuse donnée en effet, seul le niveau d'interférences limite la qualité de l'interface radio. L'ensemble de la gestion des ressources radiofréquences (contrôle de puissance, transferts intercellulaires, allocations de canaux de trafic, etc.) dépend de ce niveau d'interférence, qui est donc la variable d'entrée principale de la plupart des algorithmes implémentés dans les stations de base et les contrôleurs de station de base.

### PRESENTATION DE L'INVENTION

L'invention propose quant à elle de simuler l'incidence d'une montée en charge sur l'interface radiofréquence d'un réseau.

Notamment elle propose un procédé de test pour réseau de radio-téléphonie cellulaire à multiplexage par code de répartition tel que défini par la revendication 1.

En particulier, dans le cas d'un réseau à multiplexage par code de répartition à large bande, dont les signaux émis par les mobiles comportent des codes de canaux et des codes à brouillage, on émet en parallèle à partir dudit téléphone mobile une pluralité de codes à brouillage non alloués par le réseau.

Avantageusement, on fait varier la puissance d'émission d'au moins un code pour simuler une plus ou moins grande proximité entre le mobile et une station de base du réseau.

Notamment, on émet en parallèle, à partir du terminal mobile, plusieurs codes non orthogonaux avec des puissances, en variant la puissance d'émission d'un code à un autre, de façon à simuler une plus ou moins grande proximité entre le mobile et les stations de base.

En variante ou complément également, dans le cas d'un réseau utilisant au moins un canal à accès aléatoire, on émet simultanément plusieurs codes sur ledit canal pour créer des collisions sur ledit canal.

Selon un autre aspect encore, on fait envoyer par le terminal mobile des rapports de mesure falsifiés simulant une dégradation du lien descendant.

Ainsi, on met en oeuvre des simulations de charge sur les voies montante et descendante qui permettent de valider les algorithmes de gestion des ressources radiofréquences dans des conditions les plus proches possibles d'un environnement de production.

L'invention concerne également un terminal mobile de test pour réseau de radio- téléphonie cellulaire à multiplexage par code de répartition, caractérisé en ce qu'il comporte des moyens aptes à mettre en oeuvre le procédé proposé.

Elle concerne en outre un outil de test pour réseau de radio-téléphonie cellulaire comportant au moins un terminal mobile de test, ainsi que des moyens d'interface à partir desquels l'utilisateur pilote le test et a accès aux informations de trace qui lui sont renvoyées par le terminal mobile,
caractérisé en ce que le terminal mobile est un terminal du type précité et comporte des moyens pour, transmettre aux moyens d'interface des informations de trace relatives à la réponse du réseau.

D'autres caractéristiques et avantages de l'invention ressortiront encore de la description qui suit, laquelle est purement illustrative et non limitative et doit être lue en regard de la figure unique annexée, laquelle déjà discutée, illustre schématiquement la structure d'un outil de test de réseau cellulaire.

### DESCRIPTION D'UN MODE DE REALISATION ET DE MISE EN OEUVRE POSSIBLE - CAS DU W-CDMA

### Rappels sur le multiplexage W-CDMA

Les réseaux à multiplexage par code de répartition large bande (W-CDMA) et notamment les réseaux UMTS utilisent en combinaison deux types de codes destinés à permettre de séparer entre elles les différentes connexions radio, à savoir :
- les codes de canaux (également appelés codes de "channelisation");
- les codes à brouillage (également appelés codes de "scrambling").

### Codes de canaux ou de "channelisation".

Ce sont eux qui réalisent l'étalement de spectre. Ils servent à séparer les différents signaux émis à partir d'une même source :
- dans le sens montant ils séparent les différents canaux physiques émis par un même mobile
- dans le sens descendant ils séparent les différents canaux physiques émis par une même station de base.

Ces codes sont orthogonaux entre eux, ce qui signifie que deux transmissions utilisant des codes de canaux différents ne se brouillent pas mutuellement.

### Codes à brouillage

Les codes à brouillage n'étalent pas le spectre davantage que les codes de channelisation.

Leur rôle est de séparer les différentes sources de transmission :
- dans le sens montant ils séparent les différents mobiles
- dans le sens descendant ils séparent les différentes stations de base.

Les codes de brouillage ne sont pas orthogonaux : deux mobiles utilisant des codes de brouillage différents se gêneront mutuellement.

### Décomposition des interférences sur l'interface radio W-CDMA

Le niveau d'interférence sur l'interface radio W-CDMA fait intervenir plusieurs composantes :
- le bruit thermique
- d'éventuels brouilleurs extérieurs au réseau
- les interférences des utilisateurs de la cellule
- les interférences apportées par les utilisateurs des autres cellules.

Ces deux dernières composantes sont les plus importantes car elles dépendent du nombre d'utilisateurs dans la cellule considérée ainsi que dans les cellules adjacentes.

### Simulations de la charge de l'interface radiofréquence

Pour simuler la charge de l'interface radiofréquence et notamment les interférences des utilisateurs de la cellule ou les interférences apportées par les utilisateurs des autres cellules, on utilise les moyens qui sont différents selon que l'on veut simuler une montée en charge sur le lien montant ou une montée en charge sur le lien descendant.

### Sur la voie montante

Sur la voie montante, il est possible d'ajouter de la charge sur l'interface radio de différentes façons.

Notamment, il est possible de faire émettre à au moins un terminal mobile du système de test, sur au moins un canal donné, des codes de brouillage (codes de scrambling) non alloués par le réseau. De cette façon, on simule les interférences provoquées par des utilisateurs supplémentaires, tant à l'intérieur de la cellule qu'à l'extérieur.

Les codes de canaux utilisés sont quant à eux soit des codes alloués par le réseau, soit même des codes non alloués.

Une autre façon d'ajouter de la charge sur la voie montante consiste à faire émettre par le terminal mobile ces codes non alloués, en même temps que les codes alloués légitimement au mobile, en variant la puissance d'émission d'un code à un autre, de façon à simuler une plus ou moins grande proximité entre le mobile et les stations de base.

Une autre façon encore consiste à créer des collisions sur les canaux à accès aléatoire (par exemple : canaux PRACH ou PCPCH, par référence aux abréviations de la norme UMTS ((canal physique à paquet commun) ou PCPCH (canal physique à accès aléatoire)).

### Sur la voie descendante

On simule une dégradation du lien descendant en faisant envoyer par le terminal mobile des rapports de mesures falsifiés, et notamment en modifiant les paramètres de mesures suivants :
- CPICH Ec/N0 : énergie reçue par « chip », divisée par la densité de puissance reçue sur tout la bande, ces valeurs étant mesurées sur le canal pilote (CPICH) ;
- CPICH RSCP (Received Signal Code Power) : puissance reçue sur un code, mesurée sur le canal pilote ;
- P-CCPCH RSCP : puissance reçue sur un code, mesurée sur le canal P-CCPCH ("Primary Common Control Physical Channel" ou Canal physique commun primaire de contrôle;
- UTRA carrier RSSI (Received Signal Strength Indicator ou indicateur de force de signal reçu: puissance totale reçue sur la porteuse W-CDMA ;
- SIR : rapport signal à interférences, mesuré sur le canal DPCCH (canal de contrôle physique dédié)
- BLER : ("Block Error Rate" ou taux d'erreur bloc, mesuré pour chaque canal de transport)

### L'outil de test

Les traitements de simulation qui viennent d'être décrits sont par exemple mis en oeuvre à partir d'un ou plusieurs mobiles spécialement programmés pour mettre en oeuvre ce type de test.

Il est notamment possible de tester en laboratoire, avec un seul mobile, la réponse du réseau à différents niveaux d'interférences.

Il est également possible, dans le cas d'une infrastructure en fonctionnement, de vérifier la réaction du réseau face à plusieurs mobiles, avec des conditions d'interférences qu'il est possible de faire varier et proches de la réalité.

Un mobile mettant en oeuvre les traitements de simulation est avantageusement un terminal mobile d'un outil de test qui comporte des moyens d'interface à partir desquels l'utilisateur pilote le test et a accès aux informations de traces que lui transmet le mobile, ces informations lui permettant de connaître la réponse du réseau à la suite d'un test.

Un tel outil permet alors de constater la réaction du réseau.

Un tel outil permet alors de tester le fonctionnement des algorithmes de gestion des ressources radio implantés dans l'infrastructure (algorithmes d'adaptation de lien, de contrôle de puissance, d'allocation de ressources, d'admission dans la cellule...).

Par exemple, en faisant varier le niveau d'interférences et en regardant les paramètres des canaux de trafic alloués à ce moment-là par le réseau (codes de brouillage et de canal, méthode de correction d'erreur, etc.) on peut observer la réaction de l'algorithme d'allocation de ressources du réseau face à une baisse de la qualité de service et vérifier que cette réaction est bien conforme à celle que l'on attend.

## Revendications

1. Procédé de test pour réseau de radio- téléphonie cellulaire à multiplexage par code de répartition au moyen d'au moins un terminal mobile de test piloté par des moyens d'interface, **caractérisé en ce que** ledit procédé comprend les étapes suivantes,
- émission en parallèle à partir dudit terminal mobile, d'une pluralité de codes non orthogonaux qui simulent pour le réseau la présence d'une pluralité d'utilisateurs ; et
- transmission aux moyens d'interface par le terminal mobile de test, des informations de trace relatives à la réponse du réseau suite à l'étape d'émission.

2. Procédé selon la revendication 1, **caractérisé en ce que** dans le cas d'un réseau à multiplexage par code de répartition à large bande, dont les signaux émis par les mobiles comportent des codes de canaux et des codes à brouillage, on émet en parallèle à partir dudit téléphone mobile une pluralité de codes à brouillage non alloués par le réseau.

3. Procédé selon l'une des revendications précédentes, **caractérisé en ce qu'**on fait varier la puissance d'émission d'au moins un code pour simuler une plus ou moins grande proximité entre le mobile et une station de base du réseau.

4. Procédé selon la revendication 3, **caractérisé en ce qu'**on émet en parallèle, à partir du terminal mobile, plusieurs codes non orthogonaux avec des puissances, en variant la puissance d'émission d'un code à un autre, de façon à simuler une plus ou moins grande proximité entre le mobile et les stations de base.

5. Procédé selon l'une des revendications précédentes, **caractérisé en ce que** dans le cas d'un réseau utilisant au moins un canal à accès aléatoire, on émet simultanément plusieurs codes sur ledit canal pour créer des collisions sur ledit canal.

6. Procédé selon l'une des revendications précédentes, **caractérisé en ce qu'**on fait envoyer par le terminal mobile des rapports de mesure falsifiés simulant une dégradation du lien descendant.

7. Procédé selon la revendication 6, **caractérisé en ce que** dans un rapport de mesure envoyé par un terminal mobile, on modifie un ou plusieurs paramètres choisis parmi les paramètres de mesures suivants : énergie reçue par chip, divisée par la densité de puissance reçue sur toute la bande, ces valeurs étant mesurées sur le canal pilote ; puissance reçue sur un code, mesurée sur le canal pilote ; puissance reçue sur un code, mesurée sur le canal physique commun primaire de contrôle ; puissance totale reçue sur la porteuse ; rapport signal à interférences, mesuré sur le canal de contrôle physique dédié ; taux d'erreur par bloc, mesuré pour au moins un canal.

8. Terminal mobile de test pour réseau de radio- téléphonie cellulaire à multiplexage par code de répartition, **caractérisé en ce qu'**il comporte des moyens aptes à mettre en oeuvre le procédé selon l'une des revendications précédentes.

9. Outil de test pour réseau de radio-téléphonie cellulaire comportant au moins un terminal mobile de test, ainsi que des moyens d'interface à partir duquel l'utilisateur pilote le test et a accès aux informations de trace qui lui sont renvoyées par le terminal mobile, **caractérisé en ce que** le terminal mobile est un terminal selon la revendications 8 et comporte des moyens pour transmettre aux moyens d'interface des informations de trace relatives à la réponse du réseau.

## Claims

1. A test method for a code division multiple access cellular radiotelephone network by means of at least one mobile test terminal driven by interface means, **characterized in that** said method comprises the following steps,
- emitting in parallel from said mobile terminal a plurality of non orthogonal codes, which simulate for the network the presence of a plurality of users; and
- transmitting to the interface means by the mobile test terminal tracking information regarding the reply of the network after the emitting step.

2. The method according to claim 1, **characterized in that** in the case of a broadband code division multiple access network, the signals of which, emitted by the mobile units, comprise channel codes and interference codes, a plurality of interference codes not allocated by the network is emitted in parallel from said mobile phone.

3. The method according to any of the preceding claims, **characterized in that** the emitting power is varied by at least one code for simulating more or less close proximity between the mobile unit and a base station of the network.

4. The method according to claim 3, **characterized in that** from the mobile terminal several non orthogonal codes are emitted with powers, with the emitting power being varied from one code to another, so as to simulate more or less close proximity between the mobile unit and the base stations.

5. The method according to any of the preceding claims, **characterized in that** in the case of a network using at least one random access channel, several codes are emitted simultaneously on said channel in order to prompt collisions on said channel.

6. The method according to any of the preceding claims, **characterized in that** the mobile terminal is made to send false measuring reports simulating a deterioration of the downlink.

7. The method according to claim 6, **characterized in that** in a measuring report sent by a mobile terminal, one or more parameters are modified, chosen from the following measuring parameters: energy received per chip, divided by the power density received on the whole band, these values being measured on the pilot channel; power received on one code, measured on the pilot channel; power received on one code, measured on the control primary common physical channel; total power received on the carrier; signal/interference ratio, measured on the dedicated physical control channel; block error rate, measured for at least one channel.

8. A mobile test terminal for a code division multiple access cellular radiotelephone network, **characterized in that** it comprises means adapted for implementing the method according to any of the preceding claims.

9. A test tool for a cellular radiotelephone network comprising at least one mobile test terminal, as well as interface means, from which the user drives the test and has access to the tracking information returned to him/her by the mobile terminal, **characterized in that** the mobile terminal is a terminal according to claim 8 and comprises means for transmitting to the interface means tracking information related to the network response.

## Patentansprüche

1. Testverfahren für ein Funktelefon-Zellennetz mit Codemultiplex-Vielfachzugriff mittels mindestens eines mobilen Testendgeräts, das durch Schnittstellenmittel angesteuert wird, **dadurch gekennzeichnet, dass** das Verfahren folgende Schritte umfasst,
- paralleles Senden von dem mobilen Endgerät aus einer Vielzahl von nicht orthogonalen Codes, die für das Netzwerk das Vorhandensein einer Vielzahl von Benutzern simulieren; und
- Übertragen an die Schnittstellenmittel durch das mobile Testendgerät von Nachlaufinformationen bezüglich der Antwort des Netzwerks nach dem Sendeschritt.

2. Verfahren nach Anspruch 1, **dadurch gekennzeichnet, dass** im Falle eines Netzwerkes mit Breitband-Codemultiplex-Vielfachzugriff, dessen von den Mobilgeräten gesendete Signale Kanalcodes und Störungscodes umfassen, eine Vielzahl von Störungscodes, die nicht vom Netzwerk zugeordnet werden, parallel von dem Mobiltelefon aus gesendet werden.

3. Verfahren nach einem der vorhergehenden Ansprüche, **dadurch gekennzeichnet, dass** die Sendeleistung um mindestens einen Code geändert wird, um eine mehr oder weniger große Nähe zwischen dem Mobilgerät und einer Basisstation des Netzwerks zu simulieren.

4. Verfahren nach Anspruch 3, **dadurch gekennzeichnet, dass** von dem mobilen Endgerät aus mehrere nicht orthogonale Codes mit Leistungen gesendet werden, wobei die Sendeleistung von einem Code zum anderen geändert wird, um eine mehr oder weniger große Nähe zwischen dem Mobilgerät und den Basisstationen zu simulieren.

5. Verfahren nach einem der vorhergehenden Ansprüche, **dadurch gekennzeichnet, dass** im Falle eines Netzwerks, das mindestens einen Direktzugriffskanal verwendet, mehrere Codes gleichzeitig auf dem Kanal gesendet werden, um Kollisionen auf dem Kanal hervorzurufen.

6. Verfahren nach einem der vorhergehenden Ansprüche, **dadurch gekennzeichnet, dass** das mobile Endgerät dazu veranlasst wird, verfälschte Messberichte zu senden, die eine Verschlechterung der Abwärtsstrecke simulieren.

7. Verfahren nach Anspruch 6, **dadurch gekennzeichnet, dass** in einem von einem mobilen Endgerät gesendeten Bericht, ein oder mehrere Parameter geändert werden, die aus den folgenden Messparametern gewählt werden: pro Chip empfangene Energie, geteilt durch die auf dem gesamten Band empfangene Leistungsdichte, wobei diese Werte auf dem Pilotkanal gemessen werden; auf einem Code empfangene Leistung, gemessen auf dem Pilotkanal; auf einem Code empfangene Leistung, gemessen auf dem primären gemeinsamen physikalischen Steuerkanal; auf der Trägerfrequenz empfangene Gesamtleistung; Signal/Überlagerungs-Verhältnis, gemessen auf dem spezifischen physikalischen Steuerkanal; Blockfehlerquote, gemessen für mindestens einen Kanal.

8. Mobiles Testendgerät für ein Funktelefon-Zellennetz mit Codemultiplex-Vielfachzugriff, **dadurch gekennzeichnet, dass** es Mittel umfasst, die dazu geeignet sind, das Verfahren nach einem der vorhergehenden Ansprüche auszuführen.

9. Testtool für ein Funktelefon-Zellennetz, umfassend mindestens ein mobiles Testendgerät, sowie Schnittstellenmittel, von denen der Benutzer aus den Test steuert und Zugriff auf die Nachlaufinformationen hat, die ihm von dem mobilen Endgerät zurückgesendet werden, **dadurch gekennzeichnet, dass** das mobile Endgerät ein Endgerät nach Anspruch 8 ist und Mittel umfasst, zum an die Schnittstellenmittel Nachlaufinformationen zu übertragen, welche die Netzwerkantwort betreffen.
